Europäisches Patentamt

European Patent Office

Office européen des brevets

(11) Veröffentlichungsnummer: **0 357 813**

**A1**

## EUROPÄISCHE PATENTANMELDUNG

(21) Anmeldenummer: **88114470.3**

(51) Int. Cl.⁵: **H04N 5/45**

(22) Anmeldetag: **05.09.88**

(43) Veröffentlichungstag der Anmeldung:
**14.03.90 Patentblatt 90/11**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Bayer, Erich,Dipl.-Ing. (FH)**
**Ismaninger Strasse 24**
**D-8050 Freising(DE)**
Erfinder: **Schulz, Peter, Dipl.-Ing. (FH)**
**Döderleinstrasse 4**
**D-8000 München 70(DE)**
Erfinder: **Lüder, Rainer, Dr.-Ing.**
**Kohlstattstrasse 10**
**D-8024 Oberhaching(DE)**
Erfinder: **Braun, Bodo, Dr.-Ing.**
**St.-Cajetanstrasse 14**
**D-8000 München 80(DE)**

(54) **Verfahren zur Bild-In-Bild-Einblendung bei Bildschirmgeräten und Vorrichtung zur Durchführung des Verfahrens.**

(57) Bei den bisher bekannten Verfahren zur Bild-In-Bild-Einblendung wird ein erstes Bild, im allgemeinen ein Kleinbild, an fest vorgegebenen Bereichen in ein zweites Bild, im allgemeinen ein Großbild eingeblendet. Das erfindungsgemäße Verfahren sieht vor, die Videosignaldaten des ersten Bildes gemeinsam mit mindestens einer Markierungskennzeichnung in eine Bildspeichereinrichtung einzuschreiben. Diese Markierungskennzeichnung legt fest, wo im zweiten Bild das erste dargestellt wird. Zusätzlich wird durch die Markierungskennzeichnung das Umschalten zwischen erstem und zweitem Bild gesteuert. Erst mit diesem Verfahren ist es möglich, beliebig viele Kleinbilder in ein Großbild einzublenden. Es wird zusätzlich eine Vorrichtung zur Durchführung des Verfahrens vorgestellt.

FIG 1

## Verfahren zur Bild-In-Bild-Einblendung bei Bildschirmgeräten und Vorrichtung zur Durchführung des Verfahrens

Die Erfindung betrifft ein Verfahren zur Bild-In-Bild-Einblendung bei Bildschirmgeräten mit den Merkmalen des Oberbegriffs des Anspruches 1.

Ein solches Verfahren ist z. B. in IEEE Transactions on Consumer Electronics, Vol. CE-25, February 1979, p 152-157 beschrieben. Durch die Verwendung einer Bildspeichereinrichtung kann ein Kleinbild zeitbasiskorrigiert in ein Großbild eingeblendet werden. Über einen "read out timing detector" wird das Auslesen der das Kleinbild darstellenden Videosignaldaten aus der Bildspeichereinrichtung initiiert. Dieser "read out timing detector" ist mit einem Freigabeadreßzähler verbunden, der zum Umschalten vom Großbild auf das Kleinbild vorgesehen ist.

Eine andere Möglichkeit ein erstes Bild in einem zweiten Bild darzustellen, besteht darin, daß eine oder mehrere fest vorgegebene "Adressen" im zweiten Bild definiert werden. Nur für diese Adressen wird die Darstellung und das Auslesen eines gespeicherten ersten Bildes freigegeben.

Die bekannten Möglichkeiten zum Bild-In-Bild-Einblenden bei Bildschirmgeräten haben jedoch den Nachteil, daß stets der Ort, in dem das erste Bild dargestellt werden soll, endgültig festgelegt ist. Das erste Bild ist damit nur an diesen Orten im zweiten Bild darstellbar.

Der vorliegenden Erfindung liegt deshalb die Aufgabe zugrunde ein Verfahren und eine Vorrichtung zur Durchführung des Verfahrens anzugeben, mit dem es möglich ist, ein oder mehrere erste Bilder in ein zweites Bild einzublenden, wobei der Ort der Einblendung in einfacher Weise frei wählbar ist.

Diese Aufgabe wird durch die kennzeichnenden Merkmale des Anspruchs 1 gelöst.

Weiterbildungen der Erfindung sind Gegenstand der Unteransprüche.

Eine Vorrichtung zur Durchführung des Verfahrens ist durch die Merkmale des Anspruchs 11 gekennzeichnet.

Eine Weiterbildung der Vorrichtung ist Gegenstand des Anspruchs 12.

Das erfindungsgemäße Verfahren schlägt also vor, eine Bildspeichereinrichtung mit den Videosignaldaten eines ersten Bildes, das z. B. ein Kleinbild sein kann, zu beschreiben. Eine besondere Ausgestaltung der Erfindung besteht darin, daß die Bildspeichereinrichtung zum Speichern eines zweiten Bildes, z. B. eines Großbildes geeignet ist. Die Videosignaldaten des ersten Bildes werden unter z. B. gleichzeitigem Setzen einer oder mehrerer Markierungskennzeichnungen in einem bestimmten Teilbereich der Bildspeichereinrichtung eingeschrieben. Diese gespeicherten Videosignaldaten des ersten Bildes werden anschließend synchron mit dem zweiten Bild ausgelesen. Als besonders vorteilhaft hat sich erwiesen, die Markierungskennzeichnung für jeden Bildpunkt oder für aus mehreren Bildpunkten zusammengesetzten Bildpunktgruppen z. B. in eine ungenutzte Bit-Ebene der Bildspeichereinrichtung einzuschreiben. Sind die Speicherstellen der Bildspeichereinrichtung z. B. in 8-Bit-Wortbreite organisiert und sind die ersten sieben Bit für die Videosignaldaten reserviert, so kann in die achte ungenutzte Bit-Ebene die Markierungskennzeichnung, z. B. eine logische 1 als Freigabezeichen für die Darstellung eines eingeschriebenen Bildpunktes, geschrieben werden. Mit dem erfindungsgemäßen Verfahren ist es möglich, jeden beliebig geformten Ausschnitt eines Bildes als Kleinbild im Großbild darzustellen. Es ist dazu nur notwendig, die Markierungskennzeichnungen entsprechend zu setzen.

Die Erfindung wird im folgenden anhand von sieben Figuren näher erläutert.

Es zeigen:

FIG 1 eine Vorrichtung zur Durchführung des erfindungsgemäßen Verfahrens mit einer Bildspeichereinrichtung,

FIG 2 die Darstellung eines Großbildes mit einem eingeblendetem Kleinbild,

FIG 3 die Darstellung eines Großbildes mit drei eingeblendeten Kleinbildern,

FIG 4 die Darstellung eines Großbildes mit eingeblendeten Kleinbildern nach Art eines Kartenstapels,

FIG 5 die Darstellung zweier in einem Großbild angeordneten Kleinbilder, die zur optischen Abhebung mit jeweils einem Rahmen umgeben sind,

FIG 6 neun dargestellte Kleinbilder mit jeweils L-förmigen Rahmen, und

FIG 7 eine sogenannte Split-Screen-Darstellung.

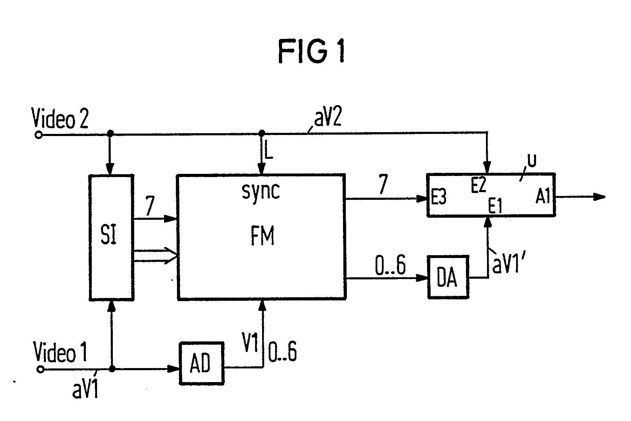

In FIG 1 ist die Vorrichtung zur Durchführung des erfindungsgemäßen Verfahrens zur Bild-In-Bild-Einblendung bei Bildschirmgeräten unter Verwendung einer Bildspeichereinrichtung dargestellt. Die Bildspeichereinrichtung FM ist mit einer Analog-Digital-Wandlereinheit AD verbunden, an der das analoge Videosignal aV1 einer ersten Videosignalquelle Video 1 in digitale Videosignaldaten V1 mit geeignetem Speicherformat umgewandelt werden. Diese Videosignaldaten V1 werden nach Maßgabe eines Einschreibtaktsignales gespeichert und sind z. B. zur Darstellung als Kleinbild in einem Großbild eines Bildschirmgerätes vorgesehen. Zweckmäßigerweise werden die Videosignaldaten V1 um den Faktor m unterabgetastet, wenn ein um den Faktor m gegenüber dem Großbild verkleinertes Bild als Kleinbild dargestellt werden soll. Wird z. B. m = 3 gewählt, so setzen sich die unterabgetasteten Videosignaldaten für jeder der 96 Zeilen aus 160 Pixel für den Luminanzwert Y und je 40 Pixel für das Chrominanzsignal U und V zusammen. Bei einem gespeicherten Großbild dage gen wären für jede der 288 Zeilen 480 Pixel Luminanzwert Y und je 120 Pixel Chrominanzwert Y und je 120 Pixel Chrominanzwert U und V notwendig.

Gemäß der Erfindung ist eine Steuereinrichtung SI zum kontrollierten Einschreiben und Auslesen der Videosignaldaten V1 in bzw. aus der Bildspeichereinrichtung FM vorgesehen. Durch diese Steuereinrichtung SI ist es erfindungsgemäß auch möglich zusätzlich zu den Videosignaldaten V1, die zum Darstellen eines Kleinbildes im Großbild vorgesehen sind, mindestens eine Markierungskennzeichnung M in die Bildspeichereinrichtung FM einzuschreiben. Diese Markierungskennzeichnung M legt fest, in welchem Bereich das Kleinbild innerhalb des Großbildes erscheint.

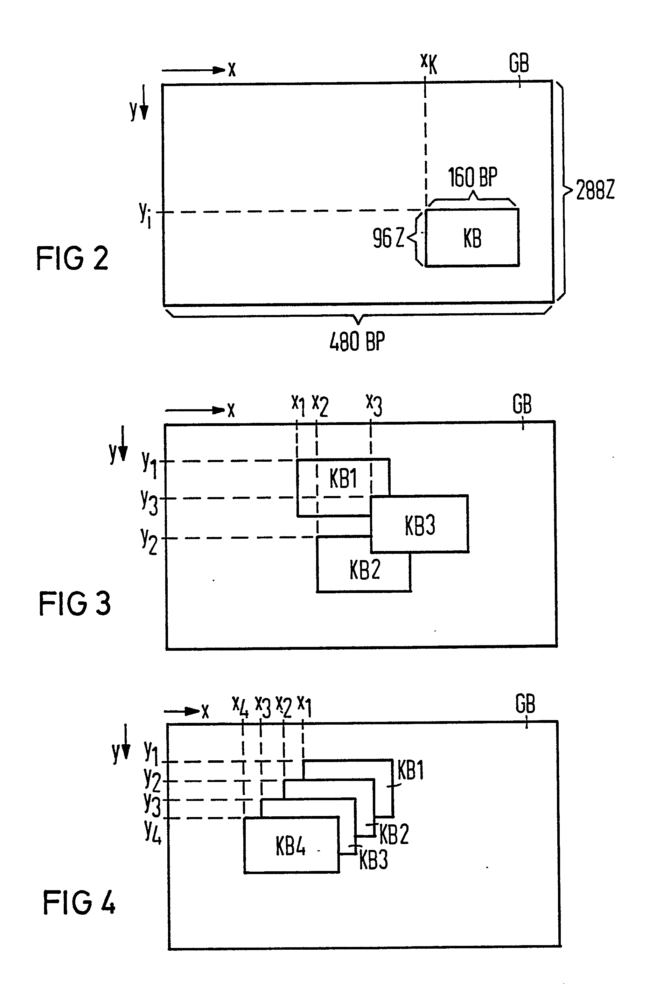

Eine besondere Ausgestaltung der Erfindung sieht vor, daß die Bildspeichereinrichtung FM zum Speichern eines Großbildes geeignet ist. In der Bildspeichereinrichtung FM sind so z. B. Speicherplätze für 480 Bildpunkte für je 288 Zeilen vorhanden, insgesamt also 138.240 Bildpunkte (vgl. dazu FIG 2). Die z. B. um den Faktor m = 3 unterabgetasteten Videosignaldaten V1 des Kleinbildes kennzeichnen dagegen nur 15.260 Bildpunkte (160 Bildpunkte für 96 Zeilen). Das erfindungsgemäße Verfahren schlägt vor, denjenigen Bereich der Speicherplätze in der Bildspeichereinrichtung FM mit mindestens einer Markierungskennzeichnung M zu versehen, in den die Videosignaldaten V1 des Kleinbildes KB eingeschrieben werden sollen. Dieser mit der Markierungskennzeichnung M beschriebene Bereich legt fest, wo innerhalb des Großbildes GB das Kleinbild KB dargestellt wird. Die Markierungskennzeichnung M kann beispielsweise in eine ungenutzte Bit-Ebene der Bildspeichereinrichtung FM für jeden Bildpunkt einzeln oder für aus mehreren Bildpunkten zusammengesetzten Bildpunktgruppen eingeschrieben werden. Benötigt ein Bildpunkt z. B. sieben Bit-Videosignaldaten, um charakterisiert werden zu können, so kann ein achtes Bit als Markierungskennzeichnung M für diesen Bildpunkt genutzt werden. Mit dem erfindungsgemäßen Verfahren ist es durch gezieltes Einschreiben der Markierungskennzeichnung M in die Bildspeichereinrichtung FM möglich, beliebig geformte Ausschnitte eines Bildes als Kleinbild innerhalb des Großbildes darzustellen.

Die gespeicherten Videosignaldaten V1 werden entsprechend FIG 1 nach Maßgabe eines durch die Steuereinheit SI generierbaren Auslesetaktsignales an eine Digital-Analog-Wandlereinheit DA geleitet, an dessen Ausgang ein analoges Kleinbildsignal aV1' ansteht. Der Ausgang der Digital-Analog-Einheit DA ist mit einer ersten Eingangsklemme E1 bzw. einen Satz von ersten Eingangsklemmen einer Umschalteinrichtung U verbunden. An eine zweite Eingangsklemme E2 bzw. einen Satz von zweiten Eingangsklemmen dieser Umschalteinrichtung U, die vorteilhafterweise eine Video-Multiplex-Einrichtung ist, ist der Anschluß eines zweiten analogen Videosignales aV2 vorgesehen. Dieses analoge Videosignal aV2 der zweiten Videosignalquelle Video 2 gelangt somit direkt an die Umschalteinrichtung U. Das zweite Videosignal aV2 ist zur Darstellung des Großbildes GB am Bildschirm vorgesehen. Der Inhalt der Bildspeichereinrichtung FM wird mit Hilfe der Steuereinrichtung SI synchron mit dem Videosignal aV2 der zweiten Videosignalquelle Video 2 ausgelesen und die gespeicherte Information in der Bildspeichereinrichtung FM direkt dazu verwendet, um zwischen den darzustellenden Bildquellen (Videosignalquelle Video 2, also Großbild und Bildspeichereinrichtung FM, also Kleinbild) umzuschalten. Dazu wird - wie ausgeführt -z. B. in eine ungenutzte Bit-Ebene (z. B. in die 8. Bit-Ebene, während in die 1. bis 7. Bitebene die Videosignaldaten gespeichert werden) der Bildspeichereinrichtung FM die Markierungskennzeichnung M für die darzustellende Bildinformation des Kleinbildes KB eingeschrieben. Die Bildsignalumschaltung erfolgt also durch die gespeicherte Markierungskennzeichnung M, die durch die Steuereinrichtung SI vorgegeben ist.

Um ein zum zweiten Videosignal aV2 synchrones Auslesen der in der Bildspeichereinrichtung FM gespeicherten Videosignaldaten V1 zu ermöglichen, werden die analogen Videosignale aV1, aV2 der ersten und zweiten Videosignalquelle Video 1, Video 2 der Steuereinrichtung SI zugeführt. Das synchrone Auslesen der Videosignaldaten V1 aus der Bildspeichereinrichtung FM ist in FIG 1 schematisch durch die Verbindungsleitung L zwischen der zweiten Videosignalquelle Video 2 und der Bildspeichereinrichtung FM angedeutet.

Unter synchronem Auslesen wird dabei ein rahmen- und taktsynchrones Auslesen verstanden, wie es z. B. durch die Verwendung eines zeilenverkoppelten Frequenzvervielfachers erreicht werden kann, der einen mit den Horizontalpulsen des Videosignales aV2 verkoppelten Takt CIS bereitstellt. Zweckgemäßigerweise werden die Horizontalpulse einem Synchronisationsprozessorbaustein entnommen, der eine von Störimpulsen und zu starkem hochfrequenten H-Jitter befreite Folge von H-Impulsen identischer Länge liefert. Durch das takt-und rahmensynchrone Auslesen des Speicherbildes wird erreicht, daß dieselbe Speicheradresse immer zum exakt gleichen Zeitpunkt bzgl. des Synchronrahmens der Quelle aV2 ausgelesen wird, und damit am exakt gleichen Ort auf z. B. dem am analogen Ausgang angeschlossenen Monitor erscheinen wird. Bezüglich der vertikalen Richtung bedeutet rahmensynchrones Auslesen, daß zum Zeitpunkt einer Videozeile aV2 immer die gleiche Zeile des Speichers ausgelesen wird. Aufgrund des Zeilensprungverfahrens können hier Korrekturen um eine Zeilenadresse notwendig werden, die hier jedoch nicht näher betrachtet werden sollen.

Weist die Bildspeichereinrichtung FM einen vollständigen Halbbildspeicherbereich auf, so ist es auch möglich, mehrere Kleinbilder im Großbild darzustellen. Dazu werden in der Bildspeichereinrichtung FM entsprechend der Anzahl der darzustellenden Kleinbilder mehrere Bereiche mit der Markierungskennzeichnung M versehen. In diese Bereiche können jeweils die Videosignaldaten einer oder mehrerer Videosignalquellen eingeschrieben werden. Nach Maßgabe der Steuereinrichtung SI und Markierungskennzeichnung M werden die Videosignaldaten der Kleinbilder ausgelesen und unter Heranziehen der im Speicherinhalt der Bildspeichereinrichtung FM enthaltenen Markierungskennzeichnung M in das Großbild eingeblendet.

Das Einschreibtaktsignal und das Auslesetaktsignal können so gewählt werden, daß Standbilder oder bewegte Bilder im Kleinbild erscheinen. Es kann jede beliebige Kombination der Kleinbilder im Großbild erscheinen, solange die Speicherkapazität innerhalb der Bildspeichereinrichtung FM nicht überschritten ist.

In den Figuren 2 bis 4 werden Beispiele für die Darstellung eines Großbildes mit einem oder mehrerer Kleinbilder gezeigt. Gemäß dem Ausführungsbeispiel in FIG 2 ist in das Großbild GB ein Kleinbild KB rechts unten eingeblendet. Die linke obere Ecke des Kleinbildes KB liegt bei $x_k$ und $y_i$. Gemäß dem erfindungsgemäßen Verfahren weist die Bildspeichereinrichtung FM z. B. Speicherplätze für insgesamt 138.240 Bildpunkte BP (480 Bildpunkte BP mal 288 Zeilen Z) auf. Nur diejenigen Speicherplätze der Bildspeichereinrichtung FM, die den Bereich des dargestellten Kleinbildes KB entsprechen, sind mit der Markierungskennzeichnung M versehen. Ist mit $x_k$ und $y_i$ z. B. der 301. Bildpunkt BP in der 180. Zeile des Bildes charakterisiert, also der 86 701. Bildpunkt bestimmt (vorausgesetzt der erste Bildpunkt BP liegt bei $x = 0$ und $y = 0$ und die Zählweise der Bildpunkte geht zeilenweise von links nach rechts), so erscheint das Kleinbild KB, bestehend aus 160 Bildpunkten BP und 96 Zeilen Z, an den Bildpunkten BP 86 701 + m x 480 bis 86 860 + n x 480 für n = 0,1,2..,95.

In FIG 3 sind drei sich teilweise überlappende Kleinbilder KB1, KB2 und KB3 dargestellt, deren linke obere Ecken durch die Koordinaten $x_1y_1$, $x_2y_2$ und $x_3y_3$ bestimmt sind. Das dritte Kleinbild KB3 kann z. B. ein bewegtes Bild sein, wobei die beiden anderen Kleinbilder KB1 und KB2 Standbilder sind. Beim Standbild wird ein Teilbildspeicherbereich nur einmal mit Videosignaldaten beschrieben, während beim bewegten Bild der Teilbildspeicherbereich stets mit neuen Videosignaldaten beschrieben wird, die nach Maßgabe eines Auslesetaktsignales immer wieder ausgelesen werden.

In FIG 4 ist das Einblenden von mehreren Kleinbildern nach Art eines Kartenstapels gezeigt.

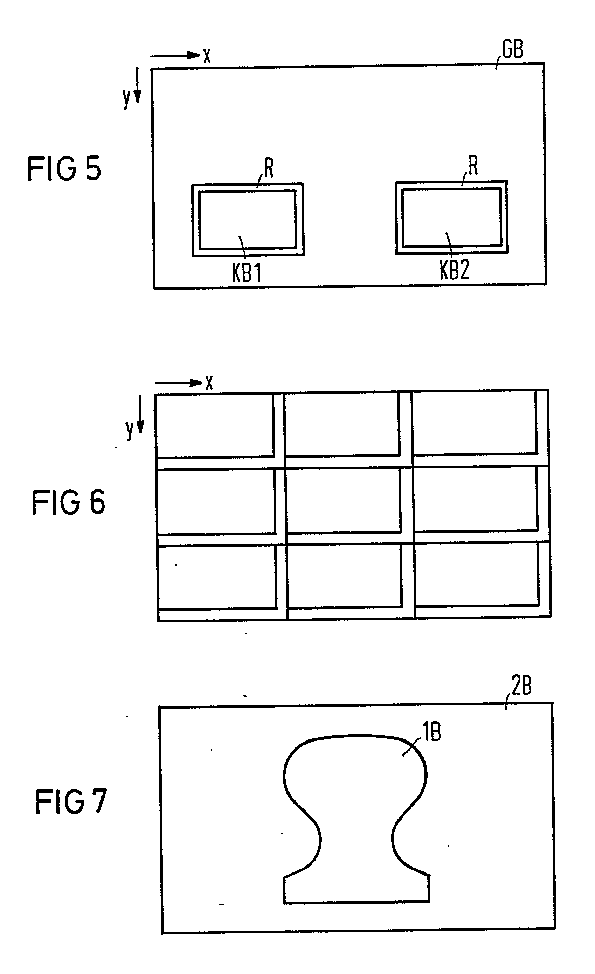

Gemäß der Erfindung ist es auch vorgesehen, gleichzeitig mit dem Einblenden des ersten Bildes in das zweite Bild einen das erste Bild umgebenden Rahmen als deutliche optische Trennung einzufügen. In FIG 5 sind zwei Kleinbilder KB1, KB2 mit solchen Rahmen R versehen. Dazu wird in die Speichereinrichtung FM zusätzlich die für den Rahmen R notwendige Information eingeschrieben. Es ist damit nicht mehr nötig, den Rahmen durch analoge Verfahren in das Bild einzublenden. Auch ein eigenes dafür vorgesehenes Ausgangsinterface entfällt. Jeder Videosignalquelle kann auch eine individuelle Rahmenfarbe zugeordnet werden, wodurch die Identifizierung durch den Betrachter des Bildes erheblich erleichtert wird. Ein weiterer Vorteil der erfindungsgemäßen Rahmeneinblendung mit Hilfe der Speichereinrichtung FM besteht darin, daß die einmal gewählte Rahmenfarbe erhalten bleiben kann, wenn z. B. auf eine andere Videosignalquelle geschaltet wird und unter Beibehaltung des Einblendbildes der vorherigen Videosignalquelle als Standbild auf die Darstellung der neuen Videosignalquelle, z. B. als bewegtes Bild, mit einer beliebigen anderen Lage und z. B. einer anderen Rahmenfarbe umgeschaltet wird. Der Rahmen wird somit durch Einschreiben von definierten Werten in betreffende Speicherplätze der Speichereinrichtung FM erzeugt. Diese Werte werden dann beim Auslesen der in der Speichereinrichtung FM gespeicherten Information wie Bildpunktwerte behandelt.

In FIG 6 ist die Verwendung von Teilen des rechteckförmigen Rahmens, beispielsweise nur des unteren und des rechten Rahmenbalkens, zur Darstellung mehrerer Kleinbilder dargestellt.

In FIG 7 ist die Erfindung anhand einer in ein zweites Bild 2B eingeblendeten ersten Bildes 1B gezeigt. Das erste Bild ist nicht verkleinert. Dieses erste Bild ist ein Bildausschnitt, der z. B. in Form eines Schlüsselloches begrenzt ist. Gemäß der Erfindung sind beliebig geformte Einblendbilder darstellbar. Die Anwendung der Erfindung ist bei sogenannter Split-Screen-Darstellung mit beliebigen Schnittformen möglich.

Mit dem erfindungsgemäßen Verfahren und der Vorrichtung zum Durchführen des Verfahrens ist das gezielte Einschreiben einer Markierungskennzeichnung M in die Bildspeichereinrichtung FM möglich, die festlegt, in welchem Bereich das Kleinbild KB im Großbild GB erscheinen soll. Ebenso wie das gezielte Einschreiben dieser Markierungskennzeichnung M zur Bildsignalumschaltung ist es auch möglich die Markierungskennzeichnung M wieder zu löschen.

Durch das dargestellte Verfahren wird eine erhebliche Vereinfachung der Umschaltlogik bei Bild-In-Bild-Einblendungen erzielt. Die flexible Handhabung beliebig vieler Einblendsegmente wird erst durch dieses Verfahren möglich. Es ist hier noch anzumerken, daß das Kleinbild nicht auf eine rechteckige Darstellung beschränkt ist. Vielmehr können die Kleinbilder aus beliebig geformten Bildausschnitten bestehen.

## Ansprüche

1. Verfahren zur Bild-In-Bild-Einblendung bei Bildschirmgeräten unter Verwendung einer Bildspeichereinrichtung (FM), in die mindestens Videosignaldaten (V1) einer ersten Videoquelle (Video 1) nach Maßgabe eines Einschreibtaktsignales eingeschrieben und nach Maßgabe eines Auslesetaktsignales ausgelesen werden, wobei die Videosignaldaten (V1) zur Darstellung mindestens eines ersten Bildes (1B) in einem aus einer zweiten Videoquelle (Video 2) erzeugten zweiten Bildes (2B) vorgesehen sind,
**dadurch gekennzeichnet,** daß in die Bildspeichereinrichtung (FM) zusätzlich zu den Videosignaldaten (V1) mindestens eine Markierungskennzeichnung (M) eingeschrieben wird, welche festlegt, in welchem Bereich innerhalb des zweiten Bildes (2B) das erste Bild (1B) darzustellen ist und durch welche das Umschalten zwischen zweitem Bild (2B) und erstem Bild (1B) gesteuert wird.

2. Verfahren nach Anspruch 1, **dadurch gekennzeichnet,** daß das erste Bild (1B) um den Faktor m gegenüber dem zweiten Bild (2B) verkleinert wird, daß die Videosignaldaten (V1) des ersten Bildes (1B) um den Faktor m unterabgetastet werden, und daß die unterabgetasteten Videosignaldaten (V1) in die Bildspeichereinrichtung (FM) geschrieben werden.

3. Verfahren nach Anspruch 1 oder 2, **dadurch gekennzeichnet,** daß als Bildspeichereinrichtung (FM) eine zum Speichern eines zweiten Bildes (2B) geeignete Bildspeicherrichtung verwendet wird, daß die Videosignaldaten (V1) des ersten Bildes (1B) in einen Teilbereich der Bildspeichereinrichtung (FM) geschrieben werden, und daß der Teilbereich durch Setzen der Markierungskennzeichnung (M) festgelegt wird.

4. Verfahren nach einem der Ansprüche 1 bis 3, **dadurch gekennzeichnet,** daß für jeden Bildpunkt des ersten Bildes (1B) eine Markierungskennzeichnung (M) in die Bildspeichereinrichtung (FM) geschrieben wird.

5. Verfahren nach einem der Ansprüche 1 bis 3, **dadurch gekennzeichnet,** daß mindestens jeweils zwei Bildpunkte des ersten Bildes (1B) in eine Bildpunktgruppe zusammengefaßt wird, und daß für jede Bildpunktgruppe des ersten Bildes (1B) eine Markierungskennzeichnung (M) in die Bildspeichereinrichtung (FM) geschrieben wird.

6. Verfahren nach einem der Ansprüche 1 bis 5, **dadurch gekennzeichnet,** daß das Einschreibtaktsignal und Auslesetaktsignal so gewählt wird, daß das erste Bild (1B) ein Standbild ist.

7. Verfahren nach einem der Ansprüche 1 bis 5, **dadurch gekennzeichnet,** daß das Einschreibtaktsignal und das Auslesetaktsignal so gewählt wird, daß das erste Bild (1B) ein bewegtes Bild ist.

8. Verfahren nach einem der Ansprüche 1 bis 7, **dadurch gekennzeichnet,** daß mehrere nach Art eines Kartenstapels übereinanderliegende erste Bilder (1B1, 1B2...) eingeblendet werden, wobei das vollständig zu sehende oberste erste Bild (1B1) ein bewegtes Bild ist.

9. Verfahren nach einem der Ansprüche 1 bis 8, **dadurch gekennzeichnet,** daß die Markierungskennzeichnung (M) löschbar ist.

10. Verfahren nach einem der Ansprüche 1 bis 9, **dadurch gekennzeichnet,** daß das erste Bild (1B) mit einem Rahmen (R) versehen wird.

11. Vorrichtung zur Durchführung des Verfahrens nach einem der Ansprüche 1 bis 10, **gekennzeichnet** durch die Merkmale:
eine Bildspeichereinrichtung (FM) zum Speichern der für mindestens ein erstes Bild (1B) vorgesehenen Videosignaldaten (V1) einer ersten Videoquelle (Video 1),
eine zwischen der Bildspeichereinrichtung (FM) und einer Umschalteinrichtung (U) geschaltete D/A-Einrichtung (DA) zum Umwandeln der gespeicherten Videosignaldaten (V1) in ein analoges Videosignal (aV1') des ersten Bildes (1B),
eine Steuereinrichtung (SI) zum kontrollierten Einschreiben und Auslesen der Videosignaldaten in bzw. aus der Bildspeichereinrichtung (FM) und zum Ansteuern der Umschalteinrichtung (U), Mittel zum Zuführen eines aus einer zweiten Videoquelle (Video 2) erzeugten zweiten analogen Videosignales (aV2) an die Umschalteinrichtung (U).

12. Vorrichtung nach Anspruch 11, **dadurch gekennzeichnet,** daß die Umschalteinrichtung (U) eine Video-Multiplex-Einrichtung ist.

# FIG 1

Video 2 —— aV2

L

Video 1 —— aV1

| SI | 7 → | sync FM | | 7 → | E3 E2 | A1 → |
|----|-----|---------|---|-----|-------|------|

AD | V1 | 0..6

0..6 → DA | aV1'

E1 | U

88 P 1 5 5 7 E 1

FIG 2

160 BP

288 Z

96 Z

KB

480 BP

FIG 3

KB1

KB3

KB2

FIG 4

KB1

KB2

KB3

KB4

FIG 5

FIG 6

FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|-----------------------------------------------------------|-------------------|------------------------------------------|
| A | US-A-4 768 083 (RCA LICENSING CORP.)<br>* Spalte 4, Zeile 51 – Spalte 5, Zeile 16; Spalte 6, Zeilen 6-12 *<br>----- | 1 | H 04 N  5/45 |
| | | | **RECHERCHIERTE SACHGEBIETE (Int. Cl.4)**<br><br>H 04 N<br>G 09 G |

Der vorliegende Recherchenbericht wurde für alle Patentansprüche erstellt

| Recherchenort | Abschlußdatum der Recherche | Prüfer |
|---------------|------------------------------|--------|
| DEN HAAG | 11-05-1989 | PIGNIEZ T.J.P. |